Europäisches Patentamt

European Patent Office

Office européen des brevets

(19)

(11) Veröffentlichungsnummer : **0 065 076**
**B1**

(12)

# EUROPÄISCHE PATENTSCHRIFT

(45) Veröffentlichungstag der Patentschrift :
10.09.86

(51) Int. Cl.⁴ : **F 02 B 27/02**

(21) Anmeldenummer : 82101672.2

(22) Anmeldetag : 04.03.82

(54) Resonanzaufladung mit variablem Ansaugsystem.

(30) Priorität : 15.05.81 DE 3119314

(43) Veröffentlichungstag der Anmeldung :
24.11.82 Patentblatt 82/47

(45) Bekanntmachung des Hinweises auf die Patenterteilung : 10.09.86 Patentblatt 86/37

(84) Benannte Vertragsstaaten :
AT CH DE FR GB IT LI NL SE

(56) Entgegenhaltungen :
DD-C- 107 750
FR-A- 1 308 738
FR-A- 2 378 183

(73) Patentinhaber : Klöckner-Humboldt-Deutz Aktiengesellschaft
Deutz-Mülheimer-Strasse 111 Postfach 80 05 09
D-5000 Köln 80 (DE)

(72) Erfinder : Honrath, Kurt, Dr.
Auf dem Rosenberg 60
D-5064 Rösrath (DE)

**Beschreibung**

Die Erfindung betrifft ein Ansaugsystem für eine Brennkraftmaschine mit zur Ausnutzung von Schwingungen für eine gemäßigte Aufladung vorgesehenen Resonanzräumen, deren eine Wand von einem Kolben gebildet ist, der in Abhängigkeit von der Drehzahl der Brennkraftmaschine zur Volumenänderung des Resonanzraums und damit Änderung der Resonanzfrequenz verstellbar ist.

Zur Abstimmung des Ansaugsystems auf die Ladungswechselfrequenz der Brennkraftmaschine ist es bekannt, das Ansaugvolumen zur Erzielung eines Resonanzeffektes zu verändern, um auf diese Weise einen möglichst guten Füllungsgrad (gemäßigte Aufladung) zu erhalten.

Aus der FR-A-23 78 183 gehen eine Vielzahl von Resonanzräumen im Ansaugsystem einer Brennkraftmaschine als bekannt hervor, deren Volumen bzw. Eingenfrequenz durch einen verschiebbaren Kolben änderbar sind. Für die Verstellung des Volumens eines Resonanzraums sind getrennte Stellmittel vorgesehen, die dem volumenveränderbaren Stellelement eine Steuerflüssigkeit zuführen, deren Druck mit der Motorleistung variiert. In einer anderen Ausführungsform wird der Kolben elektromagnetisch verstellt, wobei die elektromagnetische Stellgröße in Abhängigkeit von der Motorleistung gebildet wird. Die Stellmittel zur drehzahlabhängigen Änderung benötigen jeweils aufwendige Regelsysteme, die kostenintensiv sind und zusätzlichen Bauraum erfordern.

Aus der FR-A-13 08 738 ist ein Ansaugsystem mit zwei Einläßen bekannt, das zusätzlich zu dem üblichen Ansaugsystem an der Brennkraftmaschine angebracht werden muß. Ein Einlaß ist mit einem Ventil verschlossen, das in seine Schließstellung federbelastet ist. Bei geschlossenem Ventil (nur ein Einlaß geöffnet) weist der Resonanzraum eine erste Resonanzfrequenz und bei geöffnetem Ventil (beide Einlässe geöffnet) eine zweite Resonanzfrequenz auf. Das Ventilglied ist hinsichtlich der Resonanzfrequenzen ungedämpft. Dieses bekannte Ansaugsystem ermöglicht daher nur zwei feste Resonanzfrequenzen, bei denen eine Resonanzaufladung gewährleistet ist. Der positive Effekt der Resonanzaufladung ist daher nicht über den gesamten Drehzahlbereich kontinuierlich verfügbar, sondern auf einige konstruktiv festgelegte Drehzahlen beschränkt.

Der Erfindung liegt die Aufgabe zugrunde, ein Ansaugsystem bereit zu stellen, dessen eigene Frequenz kontinuierlich verstellbar ist, so daß der Effekt der Resonanzaufladung über dem gesamten Drehzahlbereich nutzbar ist, das aber gleichzeitig preisgünstig herstellbar sein soll und nur einen minimalen Bauraum beanspruchen soll.

Diese Aufgabe wird gemäß den kennzeichnenden Merkmalen des Anspruchs 1 gelöst.

Mit der Erfindung ist ein Ansaugsystem geschaffen, dessen volumenveränderbarer Resonanzraum kein zusätzliches Stellglied sowie keine zusätzlich zu erzeugende Stellgröße zur Veränderung der Eigenfrequenz benötigt. Der Kolben verstellt sich in Abhängigkeit von dem im Resonanzraum herrschenden mittleren Unterdruck gegen die Kraft einer Feder, so daß eine der jeweiligen Motorleistung angepaßte Resonanzfrequenz erzielt ist. Durch das mit dem Kolben verbundene Dämpfungselement wird der Kolben so träge, daß er den bei der Resonanzaufladung auftretenden Schwingungen bzw. Druckstößen nicht folgen kann. Die Verstellung des Kolbens erfolgt ausschließlich durch den mittleren Unterdruck im Resonanzraum, während der Kolben bei auftretenden Schwingungen aufgrund des Dämpfungselements eine feste, unverschiebbare Wand bildet. Aufgrund der erfindungsgemäßen Ausgestaltung sind keine zusätzlichen Stellmittel bzw. Regelsysteme notwendig, so daß die Anordnung kostengünstig herstellbar ist und nur wenig Bauraum an der Brennkraftmaschine benötigt.

Der Kolben und das Dämpfungselement bilden vorteilhaft eine auswechselbare Baueinheit, die — wie z. B. ein Stoßdämpferelement — leicht komplett auswechselbar ist.

Weiter ist es von Vorteil, wenn im Resonanzraum ein Anschlag zur Begrenzung der Auslenkung des Kolbens vorgesehen ist. Einerseits wird dadurch vermieden, daß das Dämpfungselement als Anschlag dient und dadurch das Gehäuse des Dämpfungselements überlastet wird. Andererseits wird dadurch, daß der Kolben nur bis zu einem Anschlag ausfahren kann, die Resonanzaufladung nur bis zu einer festgelegten Grenzdrehzahl wirksam, was dazu beiträgt, Überdrehzahlen des Motors zu vermeiden.

Es ist ferner zweckmäßig, das Gehäuse des Dämpfungselements um die Kolbenaustrittsseite mit einer ringförmigen Führungsleiste zu versehen, damit dieses Bauteil eine zusätzliche Anlagefläche erhält und gegen Verkanten gesichert ist.

Es ist in weiterer Ausgestaltung der Erfindung vorteilhaft, das Gehäuse des Dämpfungselements an der vom Kolben abgewandten Seite mit einem Außengewinde zu versehen, das in ein Innengewinde eingreift, welches an der stirnseitigen Öffnung des Sammelrohres zum Einsetzen des Gehäuses des Verstellelements vorgesehen ist. Dadurch wird eine einfache und sichere Befestigung sowie eine leichte Montage und Demontage gewährleistet.

Zur näheren Erläuterung der Erfindung wird auf die Zeichnungen verwiesen, die das erfindungsgemäße Verstellelement in einem Ausführungbeispiel darstellen. Es zeigen :

Figur 1 die Anordnung eines Ansaugsystems mit Sammelrohren an einer Brennkraftmaschine, die das erfindungsgemäße Verstellelement beinhalten,

Figur 2 einen Schnitt durch das erfindungsgemäße Verstellelement, das in ein Ende eines
Sammelrohres eingesetzt ist.

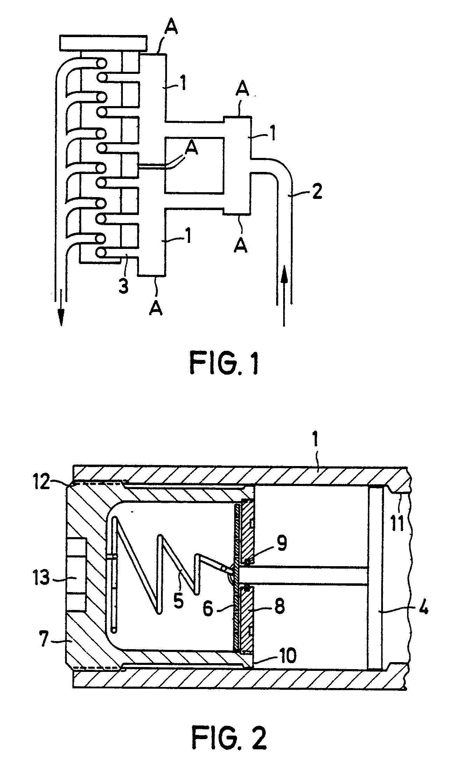

Ein Ansaugsystem setzt sich üblicherweise aus
drei Komponenten zusammen, nämlich den
Sammelrohren 1, der Ansaugleitung 2 und den
Saugrohren 3 für die einzelnen Zylinder. In Fig. 2
ist das in einem Sammelrohr 1 eingebaute Verstellelement A gezeigt, wobei dessen Kolben 4
und ein Dämpfungselement 6, 7, 8 eine Komplette, aus wechselbare Baueinheit bilden.

Die Verstellung der Eigenfrequenz des Ansaugsystems geschieht wie folgt :

Der Kolben 4 wird gegen die Kraft einer Feder 5
ausgelenkt und verringert damit das Volumen des
resonanzfähigen Raums des Sammelrohres 1. Bei
nachlassendem Unterdruck zieht die Feder 5 den
Kolben 4 wieder so weit zurück, bis wieder ein
Kräftegleichgewicht herrscht. Damit der Kolben 4
nicht auf einzelne Druckschwankungen reagiert,
wie sie bei einer Brennkraftmaschine periodisch
auftreten, ist an seinem unteren Ende eine Dämpferplatte 6 angebracht, die kleine Bohrungen
aufweist, durch die eine im Dämpfergehäuse 7
enthaltene viskose Flüssigkeit strömen soll.
Durch diese Vorrichtung reagiert der Kolben zu
träge, um durch die einzelnen Druckstöße in eine
Schwingbewegung zu geraten. Das Dämpfungsgehäuse 7 ist flüssigkeitsdicht mit einem
Schraubdeckel 8 verschlossen. In diesem ist eine
Dichtung 9 eingelassen, um einen Flüssigkeitsaustritt aus dem Durchbruch für die Kolbenstange
zu verhindern. Das Dämpfungselement 6, 7, 8
kann natürlich auch als Luftdämpfer mit an das
Dämpfungsmedium Luft angepaßten Bohrungen
ausgebildet sein. Mit 10 ist eine Führungsleiste
bezeichnet, die zur Abstützung des Bauteils im
Sammelrohr 1 dient und verhindert, daß das
Verstellelement im Sammelrohr 1 verkantet. Mit
11 ist ein im Sammelrohr 1 vorgesehener Anschlag zur Begrenzung des Kolbenhubes bezeichnet. Das Außengewinde des Dämpfungselementes und das Innengewinde des
Sammelrohres bilden eine Gewinde verbindung,
die mit 12 bezeichnet ist. Ein Innensechskant 13
am Boden des Dämpfungselementes erleichtert
die Montage und Demontage des Bauteils.

**Patentansprüche**

1. Ansaugsystem für eine Brennkraftmaschine
mit zur Ausnutzung von Schwingungen für eine
gemäßigte Aufladung vorgesehenen Resonanzräumen, deren eine Wand von einem Kolben (4)
gebildet ist, der in Abhängigkeit von der Drehzahl
der Brennkraftmaschine zur Volumenänderung
des Resonanzraums und damit Änderung der
Resonanzfrequenz verstellbar ist, dadurch gekennzeichnet, daß der Kolben (4) ausschließlich
durch den auf den Kolben (4) wirkenden Unterdruck in einem zugeordneten, den Resonanzraum bildenden Sammelrohr (1) gegen die Kraft
einer Feder (5) verstellbar ist und daß der Kolben
(4) mit einem Dämpfungselement (6, 7, 8) verbunden ist, das dem Kolben (4) eine derartige
Trägheit verleiht, daß er den Schwingungen im
Resonanzraum nicht folgt.

2. Ansaugsystem nach Anspruch 1, dadurch
gekennzeichnet, daß Kolben (4) und das Dämpfungselement (6, 7, 8) eine auswechselbare Baueinheit bilden.

3. Ansaugsystem nach Anspruch 1 oder 2, dadurch gekennzeichnet, daß im Resonanzraum ein
Anschlag (11) für den Kolben (4) vorgesehen ist.

4. Ansaugsystem nach einem der Ansprüche 1
bis 3, dadurch gekennzeichnet, daß das Gehäuse
(7) des Dämpfungselements (6, 7, 8) um die
Kolbenaustrittsseite eine ringförmige Führungsleiste (10) aufweist.

5. Ansaugsystem nach einem der Ansprüche 1
bis 4, dadurch gekennzeichnet, daß das Gehäuse
(7) des Dämpfungselements (6, 7, 8) an der vom
Kolben (4) abgewandten Seite ein Außengewinde
aufweist.

6. Ansaugsystem nach Anspruch 5, dadurch
gekennzeichnet, daß der Resonanzraum an der
Öffnung zum Einsetzen des Gehäuses (7) ein
Innengewinde aufweist.

**Claims**

1. An intake system for an internal combustion
engine, the system comprising resonance chambers provided to utilise oscillations for the purpose of obtaining a moderate charge, in which
one wall of each chamber is formed by a piston
(4) displaceable in dependence on the engine's
speed so as to alter the volume of the respective
resonance chamber and thus the resonance frequency, characterized in that the piston (4) is
solely displaceable, against the bias of a spring
(5), by the vacuum which prevails in an associated
header (1) forming the resonance chamber and
which acts on the piston, and in that the piston (4)
is attached to a dash pot (6, 7, 8) rendering the
piston sluggish to an extent sufficient for it not to
react to the oscillations in the resonance chamber.

2. An intake system according to claim 1,
characterized in that the piston (4) and the dash
pot (6, 7, 8) form an exchangeable constructional
unit.

3. An intake system according to claim 1 or
claim 2, characterized in that each resonance
chamber is provided with a stop (11) for the
piston.

4. An intake system according to any of the
claims 1 to 3, characterized in that the casing (7)
of the dash pot (6, 7, 8) is provided around its end
portion forming the piston's outlet with an annular guide fillet (10).

5. An intake system according to any of the
claims 1 to 4, characterized in that the dash pot's
(6, 7, 8) casing (7) is externally screw-threaded at
its end portion opposite the piston (4).

6. An intake system according to any of the
claims 1 to 5, characterized in that the resonance
chamber is internally screw-threaded at its mouth
through which the casing (7) is inserted thereinto.

## Revendications

1. Système d'admission pour un moteur à combustion interne, comportant des espaces de résonance prévus en vue d'utiliser des oscillations pour une suralimentation modérée, espaces de résonance dont une paroi est formée par un piston (4) qui peut se déplacer en fonction de la vitesse de rotation du moteur à combustion interne en vue de faire varier le volume de l'espace de résonance et ainsi faire varier la fréquence de résonance, système d'admission caractérisé en ce que le piston (4) est déplaçable, contre la force d'un ressort (5), exclusivement sous l'effet de la dépression agissant sur ce piston (4), dans un tuyau collecteur (1) associé formant l'espace de résonance, le piston (4) étant relié à un élément amortisseur (6, 7, 8), qui confère au piston (4) une inertie telle, qu'il ne suit pas les oscillations se produisant dans l'espace de résonance.

2. Système d'admission selon la revendication 1, caractérisé en ce que le piston (4) et l'élément amortisseur (6, 7, 8) constituent une unité de construction interchangeable.

3. Système d'admission selon la revendication 1 ou 2, caractérisé en ce que dans l'espace de résonance est prévue une butée (11) pour le piston (4).

4. Système d'admission selon l'une des revendications 1 à 3, caractérisé en ce que le carter (7) de l'élément amortisseur (6, 7, 8) est pourvu autour du côté sortie du piston d'une barre de guidage (10) de forme annulaire.

5. Système d'admission selon l'une des revendications 1 à 4, caractérisé en ce que le carter (7) de l'élément amortisseur (6, 7, 8) présente un filetage extérieur du côté situé à l'opposé du piston (4).

6. Système d'admission selon la revendication 5, caractérisé en ce que l'espace de résonance présente un filetage intérieur à l'endroit de l'ouverture prévue pour la mise en place du carter (7).

FIG. 1

FIG. 2